# EUROPÄISCHE PATENTSCHRIFT

(11) **EP 1 037 763 B1**
(45) Veröffentlichungstag und Bekanntmachung des Hinweises auf die Patenterteilung: **08.11.2006**
(21) Anmeldenummer: 98964483.6
(22) Anmeldetag: 03.12.1998
(51) Int. Cl.: B60K 31/00

(54) **VERFAHREN UND VORRICHTUNG ZUM MANÖVRIEREN VON KRAFTFAHRZEUGEN**
METHOD AND DEVICE FOR MANEUVERING MOTOR VEHICLES
PROCEDE ET DISPOSITIF POUR MANOEUVRER DES VEHICULES AUTOMOBILES

(30) Priorität: 04.12.1997 DE 19753764
(43) Veröffentlichungstag der Anmeldung: 27.09.2000
(73) Patentinhaber: Continental Teves AG & Co. oHG, 60488 Frankfurt am Main (DE)
(72) Erfinder: ECKERT, Alfred, D-55129 Mainz (DE); DIEBOLD, Jürgen, D-65760 Eschborn (DE); DRUMM, Stefan, A., D-55291 Saulheim (DE); BERTHOLD, Thomas, D-64293 Darmstadt (DE)
(86) Internationale Anmeldenummer: PCT/EP1998/007860
(87) Internationale Veröffentlichungsnummer: WO 1999/029531

(56) Entgegenhaltungen:
- DE-A- 3 334 723
- DE-A- 3 421 387
- DE-A- 3 823 387
- DE-A- 19 523 235
- GB-A- 2 053 394
- US-A- 4 969 103
- PATENT ABSTRACTS OF JAPAN vol. 012, no. 134 (M-689), 23. April 1988 & JP 62 255252 A (MITSUBISHI ELECTRIC CORP), 7. November 1987
- PATENT ABSTRACTS OF JAPAN vol. 011, no. 098 (M-575), 27. März 1987 & JP 61 247525 A (MITSUBISHI ELECTRIC CORP), 4. November 1986

## Beschreibung

Die Erfindung betrifft eine Manövrierhilfe für Kraftfahrzeuge und ein Verfahren zum Manövrieren von Kraftfahrzeugen, die ein lastunabhängiges, sicheres und problemloses Bewegen des Fahrzeugs ermöglichen. Insbesondere betrifft die Erfindung eine Einparkhilfe.

Das Einparken und Manövrieren von Fahrzeugen ausgerüstet mit leistungsstarken Motoren und Automatikgetrieben kann je nach Steigung/Gefälle oder Motorcharakteristik Schwierigkeiten bereiten. Beispielsweise beim rückwärts Einparken eines Fahrzeugs an einer abschüssigen Straße ist es oftmals für den Fahrer schwierig über das Gaspedal eine Geschwindigkeit einzustellen, welche ein sicheres und problemloses Einparken ermöglicht. Oftmals muß mit gleichzeitiger Gas- und Bremspedalbetätigung operiert werden, um den Einparkvorgang zu bewältigen. Dabei kann es oft zu unerwünschten Fahrzeugreaktionen kommen, die den Fahrer überfordern oder zumindest das Manövrieren erschweren.

In der DE 33 34 723 A1 ist eine Einrichtung zur Steuerung eines Motors und/oder einer automatischen Kupplung von Kraftfahrzeugen beschrieben, die eine ein Rangierfahrprogramm enthaltende Motor-Rangiersteuereinrichtung aufweist, durch die dem unteren Stellbereich eines Gaspedals für kleine Fahrzeuggeschwindigkeiten oder Motordrehzahlen ein gegenüber dem Normalbetrieb größerer Stellweg des Gaspedals zugeordnet wird.

Aus der JP 62-255252 A ist ein Verfahren zur Steuerung einer Kriechgeschwindigkeit von Fahrzeugen bekannt, bei dem Signale von Sensoren für die Motordrehzahl, das Gaspedal und die Parkbremse erfasst und ausgewertet werden und beim Vorliegen von Bedingungen für eine Kriechgeschwindigkeit der Motor oder die Bremsen des Fahrzeugs entsprechend gesteuert wird.

Eine Aufgabe der Erfindung ist es eine Manövrierhilfe für Kraftfahrzeuge und ein Verfahren zum Manövrieren von Kraftfahrzeugen zu schaffen, die ein lastunabhängiges, sicheres und problemloses Bewegen des Fahrzeugs in einem Niedergeschwindigkeitsbereich ermöglichen.

Die Aufgabe wird gemäß den Merkmalen der unabhängigen Patentansprüche gelöst. Die abhängigen Patentansprüche zeigen vorteilhafte Ausführungsformen und Weiterentwicklungen der Erfindung auf.

Erfindungsgemäß kann die Manövrierhilfe für Kraftfahrzeuge einen Gaspedalsensor zum Erfassen einer Gaspedalstellung α aufweisen. Weiterhin kann sie eine Einrichtung zum Erfasse einer Fahrzeuggeschwindigkeit v_{ref} aufweisen und es kann eine Steuereinheit vorgesehen sein, die die Gaspedalstellung α und die Fahrzeuggeschwindigkeit v_{ref} aufnimmt. Die Steuereinheit kann entweder über die erfaßte Gaspedalstellung α und die Fahrzeuggeschwindigkeit v_{ref} darauf schließen ob sich das Fahrzeug in einem Manövrierzustand befindet, oder die Steuereinheit kann über eine beispielsweise durch den Fahrer betätigte Zusatzeingabe eine derartige Information erhalten. Natürlich können auch obengenannte Eingabeinformationen kombiniert werden, um auf das Vorliegen eines Manövrierzustands zu schließen. Wenn die Steuereinheit einen Manövrierzustand erfaßt hat kann ein Antriebsaggregat und/ oder ein Bremssteuersystem das Fahrzeug derart ansteuern, daß es mit einer Manövriergeschwindigkeit bewegt wird.

Die erfindungsgemäße Manövrierhilfe kann dann auf das Vorliegen eines Manövrierzustands schließen, wenn die Gaspedalstellung α kleiner oder gleich als ein Grenzwert α_{grenz} ist, wenn eine erste Ableitung α̇ der Gaspedalstellung α̇ kleiner oder gleich als ein Grenzwert α̇_{grenz} ist und/oder wenn die Fahrzeuggeschwindig-keit v_{ref} kleiner oder gleich als ein Grenzwert v_{grenz} sind. zusätzlich kann die Steuereinheit als Bedingung für das Vorliegen des Manövrierzustands hinzuziehen, daß eine zweite Ableitung α der Gaspedalstellung α kleiner oder gleich als ein Grenzwert α_{grenz} ist.

Erfindungsgemäß ist es somit in vorteilhafter Weise möglich aus erfaßten Signalen der Gaspedalstellung α und/oder der Fahrzeuggeschwindigkeit v_{ref} zur ermitteln, ob ein Manövrierzustand vorliegt, d.h. ob etwa der Fahrer einen Einparkvorgang durchführen möchte. Insbesondere kann etwa auf einen derartigen Einparkvorgang geschlossen werden, wenn der Fahrer das Gaspedal nur wenig durchdrückt, die Gaspedaliederdrückgeschwindigkeit gering ist und zusätzlich die Fahrzeuggeschwindigkeit unter dem vorgenannten Grenzwert liegt. Wenn ein Einparkvorgang detektiert wurde liegt ein sog. low speed manoeuvering (LSM) vor. Diese LSM-Regelung kann dann durch den Fahrer entweder über eine Einpedalbedienung oder eine Zweipedalbedienung weiter beeinflußt werden.

Bei der Einpedalbedienung entspricht eine erfaßte Betätigung des Gaspedals einem Einstellen der Manövriergeschwindigkeit und ein Loslassen des Gaspedals entspricht einem Abbremsen des Fahrzeugs, mit einer damit verbundenen Betätigung einer Feststellbremse, wenn die Fahrzeuggeschwindigkeit v_{ref} = 0 ist. Der Fahrer kann somit nur durch die Betätigung des Gaspedals den Einparkvorgang steuern, wobei das Fahrzeug automatisch abbremst, wenn der Fahrer vom Gaspedal geht und zusätzlich wird automatisch die Feststellbremse aktiviert, wenn das Fahrzeug stillsteht. Die Manövriergeschwindigkeit kann hierbei konstant gehalten werden, unabhängig davon, welche Gaspedalstellung vom Fahrer gewählt wird (natürlich innerhalb der vorgenannten Grenzen zwischen 0 < α < α_{grenz}.

Eine andere Variante wäre die Manövriergeschwindigkeit über eine entsprechende Funktion dem Niederdrückungsgrad des Gaspedals anzupassen. Dies würde jedoch ebenso nur in obigen Grenzen erfolgen (0 < α < α_{grenz}).

Bei einer Zweipedalbedienung entspricht eine erfaßte Betätigung des Gaspedals dem Einstellen einer Beschleunigung des Fahrzeugs, eine Nichtbetätigung des Gaspedals und eines Bremspedals entspricht einem Konstanthalten der Manövriergeschwindigkeit und eine Betätigung des Bremspedals entspricht einer Verringerung der Manövriergeschwindigkeit mit einer damit verbundenen Betätigung einer Feststellbremse, wenn die Fahrzeuggeschwindigkeit v_{ref} = 0 ist.

Wie oben geschildert, kann sowohl durch die Einpedalbedienung als auch durch die Zweipedalbedienung eine effektive und einfache Steuerung des Einparkvorgangs durchgeführt werden, mit einer abschließenden Betätigung der Feststellbremse, wenn der Einparkvorgang beendet ist.

Insbesondere soll angemerkt werden, daß der gesamte Einparkvorgang vollkommen lastunabhängig ist. Das heißt, daß etwa bei dem Vorliegen eines starken Gefälles (positive und/oder negative Steigung, bei einem hohen Fahrzeuggewicht, usw.) die gleiche Einparkgeschwindigkeit durch den LSM-Regler eingestellt wird, wie etwa im flachen Gelände und einem vollkommen unbeladenen Fahrzeug. Damit wird dem Fahrer ein Hilfsmodul zur Seite gestellt, welches ihm in jeder Situation ein sicheres Manövrieren und/oder Einparken ermöglicht.

Weiterhin kann die Manövriercharakteristik des Fahrzeugs bei steigenden Fahrzeuggeschwindigkeiten v_{ref}, bei größeren Gaspedalstellungen α und/oder bei schnelleren Gaspedalbetätigungen α̇ an eine normale, dem heutigen Fahrzeugverhalten entsprechende Charakteristik angenähert werden. Das heißt insbesondere, daß beispielsweise bei einer Gaspedalbetätigungsgeschwindigkeit 0<α̇<α̇_{grenz} die Manövriercharakteristik mit steigenden Gaspedalbetätigungsgeschwindigkeiten immer näher an die Normalcharakteristik angenähert wird. Dadurch ist insbesondere ein weiterer Freiheitsgrad eingeführt, der zusätzliche Anpassungsmöglichkeiten der Manövriercharakteristik realisiert. Dadurch ist es möglich ein weiches Anpassen der Fahrzeugreaktionen zu erzielen, d.h. einen fließenden Übergang zwischen der Manövriercharakteristik und der normalen Charakteristik des Fahrzeugs zu realisieren. Unter der Fahrzeugreaktion wird eine Reaktion des Fahrzeugs hervorgerufen durch Fahrereingaben verstanden.

Weiterhin kann erfindungsgemäß eine Wähleinrichtung zum Auswählen eines Manövrierfahrzustands vorgesehen sein. Eine derartige Wähleinrichtung wäre beispielsweise ein Schalter, ein Druckknopf oder ähnliches, der vom Fahrer dann betätigt wird, wenn er das Fahrzeug manövrieren möchte. Der vom Fahrer gewünschte Manövrierzustand kann dann von der Steuereinheit erfaßt werden und es kann ein LSM-Vorgang ausgeführt werden. Befindet sich nun das Fahrzeug in einem derartigen LSM-Zustand so könnte der Fahrer das Gaspedal auch voll niederdrücken und das Fahrzeug würde mit der gewählten Manövriergeschwindigkeit einparken. Natürlich könnte auch die Manövriergeschwindigkeit zwischen einer geringen Gaspedalstellung und der maximalen Gaspedalstellung angepaßt werden, wobei bei der maximalen Gaspedalstellung die maximal vorausbestimmte Manövrierge-schwindigkeit eingestellt werden würde. Natürlich könnte die vorgenannte Wähleinrichtung zum Auswählen eines Manövrier-zustands auch mit den vorgenannten Erfassungsöglichkeiten für den Manövrierzustand kombiniert werden.

Weiterhin kann erfindungsgemäß ein Abstandssensor vorgesehen sein, der bei Erreichen eines Mindestabstands zu einem Hindernis, beispielsweise ein anderes Fahrzeug, das Fahrzeug abbremst, wobei dann automatisch die Feststellbremsen aktiviert werden.

Im folgenden werden beispielhaft Ausführungsformen der Erfindung anhand von beiliegenden schematischen Zeichnungen näher erläutert. Es zeigen:
- Fig. 1: eine schematische Darstellung eines Kraftfahrzeugs;
- Fig. 2: einen Flußlaufplan zur Erkennung des Vorliegens eines LSM-Zustands;
- Fig. 3: eine graphische Darstellung der Manövriercharakteristik des Fahrzeugs für eine Einpedalbedienung; und
- Fig. 4: eine graphische Darstellung der Manövriercharakteristik des Fahrzeugs für eine Zweipedalbedienung.

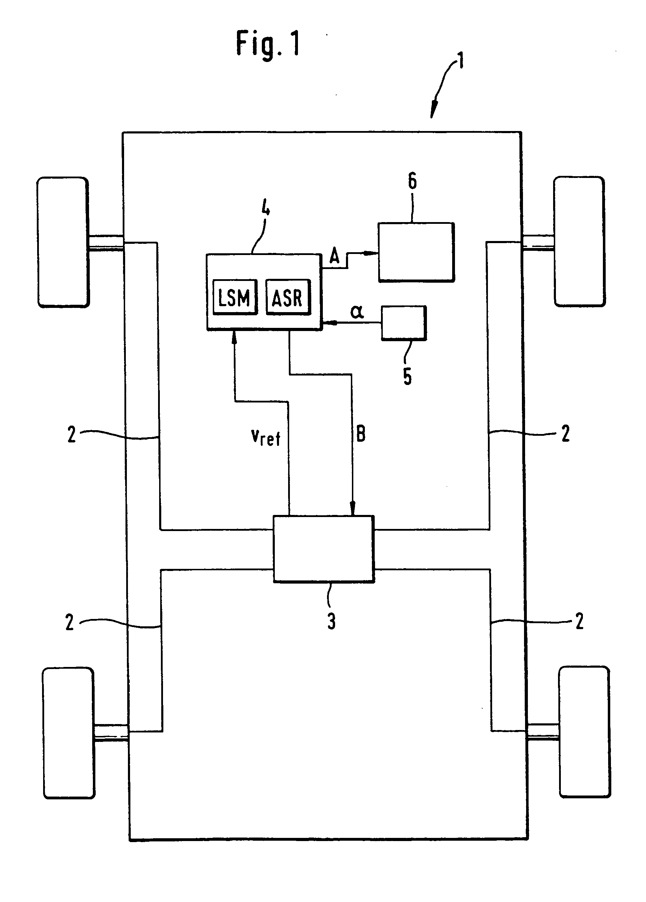

In der Fig. 1 ist ein Kraftfahrzeug 1 mit Bremsleitungen 2 dargestellt. Die Bremsleitungen können hydraulische Bremsleitungen 2 sein oder etwa auch elektrische Signalleitungen zum Ansteuern von entsprechenden Aktuatoren zur Erzielung einer Bremswirkung. Die Bremsleitungen werden über ein Bremssteuer-system 3 angesteuert. Das Bremssteuersystem 3 kann eine ABS-Regelfunktion enthalten und die Fahrzeuggeschwindigkeit v_{ref} ausgeben. Die Fahrzeuggeschwindigkeit v_{ref} wird von einer Steuereinheit 4 aufgenommen. Die Steuereinheit 4 kann einen LSM-Regler und eine ABS/ASR-Funktion enthalten. Natürlich können das Bremssteuersystem 3, der LSM-Regler und der ABS/ASR-Regler in einer Steuereinheit zusammengefaßt werden oder jeweils separat ausgebildet sein. Der LSM-Regler kann von einem Gaspedalsensor 5 ein Signal über die Stellung des Gaspedals erhalten. Der LSM-Regler kann weiterhin ein Steuersignal A an einen Motor 6 ausgeben. Dieses Steuersignal A könnte etwa den Motor 6 dazu veranlassen das Fahrzeug 1 zu beschleunigen oder das Fahrzeug 1 zu verzögern (durch eine Zurücknahme der Motorleistung). Der LSM-Regler kann auch ein Steuersignal B an das Bremssteuersystem 3 ausgeben um direkt eine Abbremsung des Kraftfahrzeugs 1 über die Betriebsbremsen zu veranlassen. Über das Steuersignal B kann auch eine nicht dargestellte Feststellbremse aktiviert werden.

Die Feststellbremse könnte beispielsweise durch eine Betätigung von zwei Bremsen erfolgen (beispielsweise die beiden Vorderradbremsen).

Da die Motorregelung meist unter der normalen Fahrereingabe zum Motormanagement (E-Gas) arbeitet, kann das Motordrehmoment beispielsweise mit der ASR-Schnittstelle abgeregelt werden. Das an der Antriebsachse aufkommende Motordrehmoment kann gegebenenfalls mit einem Bremseneingriff (Booster und/oder Feststellbremse) weiter reduziert werden. Bei einem stehenden Fahrzeug würde auf jeden Fall die Feststellbremse aktiviert werden (wird im folgenden noch näher beschrieben).

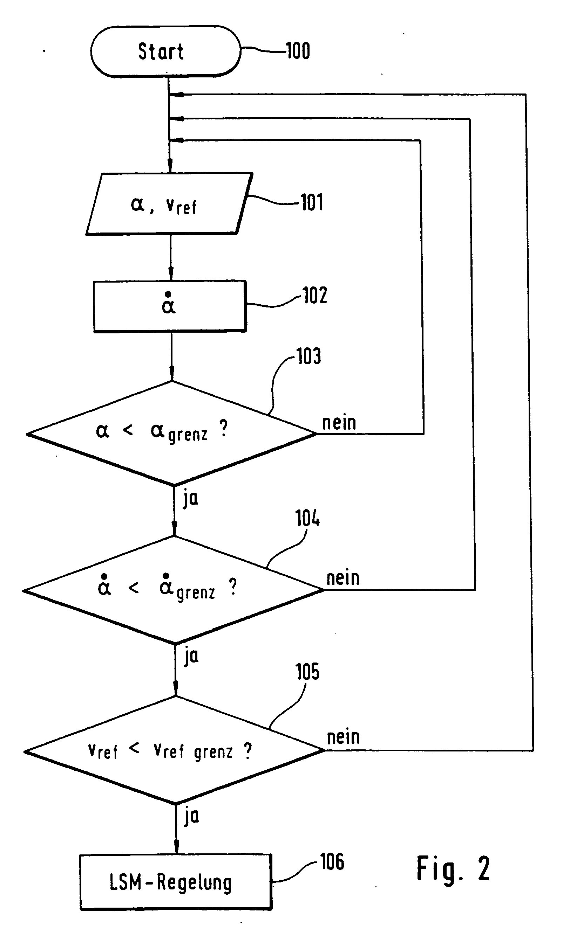

In der Fig. 2 ist ein Beispiel eines Funktionsablaufs gezeigt, bei der zyklisch beurteilt werden kann, ob eine LSM-Regelung erfolgen soll.

Nach dem Start in einem Schritt 100 werden in einem Schritt 101 die aktuelle Gaspedalstellung α und die aktuelle Fahrzeuggeschwindigkeit v_{ref} eingelesen. Wie voranstehend schon erwähnt, kann die aktuelle Fahrzeuggeschwindigkeit v_{ref} etwa vom ABS-Regler abgegriffen werden.

In einem Schritt 102 wird die erste Ableitung α̇ der Gaspedalstellung α ermittelt. In diesem Schritt kann ebenso, sofern erforderlich, die zweite Ableitung der Gaspedalstellung ermittelt werden (nicht dargestellt).

In einem Schritt 103 wird abgefragt, ob die erfaßte Gaspedalstellung α kleiner als ein Grenzwert α_{grenz} ist. Ist dies nicht der Fall, so wird zwischen den Schritt 100 und den Schritt 101 zurückverzweigt. Ist die Gaspedalstellung kleiner als der Grenzwert α_{grenz} so wird zu einem Schritt 104 verzweigt, in dem abgefragt wird, ob die Gaspedalniederdrückgeschwindigkeit α̇ kleiner ist als der Grenzwert α̇_{grenz} Ist dies nicht der Fall, so wird zwischen den Schritt 100 und den Schritt 101 zurückverzweigt. Sofern die Gaspedalniederdrückgeschwindigkeit α̇ kleiner ist als der Grenzwert α̇_{grenz} so wird zu einem Schritt 105 verzweigt, in dem abgefragt wird, ob die Fahrzeuggeschwindigkeit v_{ref} kleiner ist als ein Grenzwert v_{ref grenz}. Ist dies nicht der Fall, so wird zurück zwischen die Schritte 100 und 101 verzweigt. Sofern die Fahrzeuggeschwindigkeit v_{ref} kleiner ist als der Grenzwert v_{ref grenz}, so wird die LSM-Regelung in einem Schritt 106 aktiviert.

Wie voranstehend geschildert ist kann die LSM-Regelung durch den Fahrer über eine Einpedalbedienung (Gaspedal) als Geschwindigkeitseingabe und/oder über eine Zweipedalbedienung (Gaspedal/Bremspedal) als Beschleunigungseingabe beeinflußt werden.

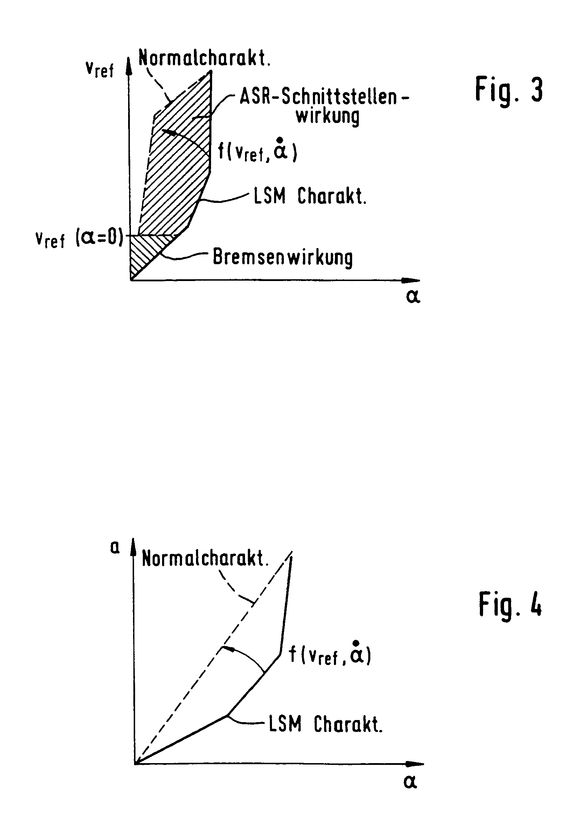

Bei der Einpedalbedienung entspricht für Manövriergeschwindigkeiten die Gaspedalstellung α einer bestimmten Geschwindigkeit, d.h. beispielsweise α = konstant bedeutet eine konstante Fahrzeuggeschwindigkeit v_{ref} und das Loslassen des Gaspedals bedeutet "Anhalten". Für steigende Geschwindigkeiten nähert sich die veränderte Charakteristik der Normalcharakteri-stik an, ebenso wie bei schnellen Gaspedalbetätigungen oder größeren Winkeln α (siehe Fig. 3). Somit wird es dem Fahrer ermöglicht, unabhängig von den Randbedingungen (beispielsweise Gefälle, Last, usw.) mit konstanter Geschwindigkeit zu operieren. Da die Regelung meist unter der normalen Fahrerein-gabe zum Motormanagement (E-Gas) arbeitet, kann das Motor-management mit der ASR-Schnittstelle abgeregelt werden.

Bei einer Zweipedalbedienung entspricht die Gaspedalstellung α einer Beschleunigung, d.h. α = konstant kann eine konstante Beschleunigung bedeuten. Ist kein Pedal betätigt, so wird die erreichte Geschwindigkeit v_{ref} konstant gehalten. Eine Betäti-gung der Bremse wirkt direkt als Verzögerung. Für steigende Geschwindigkeiten kann sich die veränderte Charakteristik der Normalcharakteristik annähern, ebenso wie bei schnellen Gaspedalbetätigungen oder größeren Winkeln α (siehe Fig. 4).

Zur Erläuterung der obengenannten Regelungsprinzipien des LSM-Reglers ist in Fig. 3 eine graphische Darstellung gezeigt, die als Abszisse die Gaspedalstellung α und als Ordinate die Fahrzeuggeschwindigkeit v_{ref} darstellt. Die Geschwindigkeit v_{ref} (α = 0) entspricht einer Fahrzeuggeschwindigkeit bei losgelassener Bremse und bei einer Gaspedalstellung α = 0. Bei einem Automatikgetriebe erfolgt üblicherweise bei einem Loslassen der Bremse und einer Nichtbetätigung des Gaspedals eine Kriechbewegung des Fahrzeugs, welche abhängig ist von dem Drehmomentwandler, der Motorleistung, dem Gefälle, usw. Liegt nun beispielsweise eine Geschwindigkeit v_{ref} vor, die kleiner als die Geschwindigkeit v_{ref} (α = 0) ist, so erfolgt eine Betätigung der Bremsen des Fahrzeugs, beispielsweise über das in der Fig. 1 gezeigte Steuersignal B (dieser Bereich ist in der Fig. 3 mit "Bremsenwirkung" bezeichnet).

Die LSM-Charakteristik ist durch die durchgezogene Linie dargestellt und die Normalcharakteristik durch die Strichlinie. Wie dargestellt, nähert sich die LSM-Charakteristik abhängig von der Fahrzeuggeschwindigkeit v_{ref} und der Gaspedalnieder-drückgeschwindigkeit α̇ der Normalcharakteristik an. Zwischen der LSM-Charakteristik und der Normalcharakteristik liegt ein ASR-Schnittstellenwirkungsbereich vor, in dem der Motor entsprechend abgeregelt wird, um die gewünschte Manövriergeschwindigkeit einzustellen.

In der Fig. 4 ist als Abszisse die Gaspedalstellung α und als Ordinate die Fahrzeugbeschleunigung a dargestellt. Die LSM-Charakteristik ist in dieser graphischen Darstellung als durchgezogene Linie und die Normalcharakteristik als Strichlinie gezeigt. Die LSM-Charakteristik nähert sich ebenso wie bei der Fig. 3 abhängig von der Fahrzeuggeschwindigkeit v_{ref} und der Gaspedalniederdrückgeschwindigkeit α̇ der Normalcharakteristik an.

Wie u.a. durch die Fig. 3 und 4 verdeutlicht, kann ein weiches Anpassen der LSM-Charakteristik an die Normalcharakteristik bei sich ändernden Randbedingungen erfolgen.

Weiterhin sei angemerkt, daß sich die LSM-Charakteristik auch abhängig von α̇ an die Normalcharakteristik annähern kann. Natürlich kann die Annäherung der Charakteristik auch von einer beliebigen Kombination der Werte v_{ref}, α̇ und/oder α abhängen.

## Patentansprüche

1. Manövrierhilfe für Kraftfahrzeuge, mit
- einem Gaspedalsensor (5) zum Erfassen einer Gaspedalstellung α,
- einer Einrichtung zum Ermitteln einer Fahrzeuggeschwindigkeit v_{ref} und
- einer Steuereinheit (4) zum Aufnehmen der Gaspedalstellung α und der Fahrzeuggeschwindigkeit v_{ref} und zum Erfassen, ob sich das Fahrzeug (1) in einem Manövrierzustand befindet, wobei bei Vorliegen eines solchen Zustands ein Antriebsaggregat (6) und/oder ein Bremssteuersystem (3) des Fahrzeugs (1) derart angesteuert werden, daß das Fahrzeug (1) mit einer Manövriergeschwindigkeit bewegt wird,
bei welcher Manövrierhilfe die Steuereinheit (4) dann auf das Vorliegen eines Manövrierzustands schließt, wenn die Gaspedalstellung α kleiner oder gleich als ein Grenzwert α_{grenz} ist, wenn eine erste Ableitung α̇ der Gaspedalstellung α kleiner oder gleich als ein Grenzwert α̇_{grenz} ist und/oder wenn die Fahrzeuggeschwindigkeit v_{ref} kleiner oder gleich als ein Grenzwert v_{grenz} sind.

2. Manövrierhilfe nach Anspruch 1, **dadurch gekennzeichnet, daß** die Steuereinheit (4) dann auf das Vorliegen eines Manövrierzustands schließt, wenn die Gaspedalstellung α kleiner oder gleich als ein Grenzwert α_{grenz} ist, wenn eine erste Ableitung α̇ der Gaspedalstellung α kleiner oder gleich als ein Grenzwert α̇_{grenz} ist und/oder wenn die Fahrzeuggeschwindigkeit v_{ref} kleiner oder gleich als ein Grenzwert v_{grenz} sind.

3. Manövrierhilfe nach Anspruch 1 oder 2, **dadurch gekennzeichnet, daß** die Steuereinheit (4) als zusätzliche Bedingung für das Vorliegen des Manövrierzustands hinzunimmt, daß eine zweite Ableitung α der Gaspedalstellung α kleiner oder gleich als ein Grenzwert α_{grenz} ist.

4. Manövrierhilfe nach zumindest einem der Ansprüche 1 bis 3, **dadurch gekennzeichnet, daß** der Manövrierzustand über eine Einpedalbedienung gesteuert wird, wobei eine erfaßte Betätigung des Gaspedals einem Einstellen der Manövriergeschwindigkeit entspricht und ein Loslassen des Gaspedals einem Abbremsen entspricht, mit einer damit verbundenen Betätigung einer Feststellbremse, wenn die Fahrzeuggeschwindigkeit v_{ref} gleich Null ist.

5. Manövrierhilfe nach zumindest einem der Ansprüche 1 bis 3, **dadurch gekennzeichnet, daß** der Manövrierzustand über eine Zweipedalbedienung gesteuert wird, wobei eine erfaßte Betätigung des Gaspedals das Einstellen einer Beschleunigung, eine Nichtbetätigung des Gaspedals und eines Bremspedals ein Konstanthalten der Manövriergeschwindigkeit und eine Betätigung des Bremspedals eine Verringerung der Manövriergeschwindigkeit mit einer damit verbundenen Betätigung einer Feststellbremse bedeutet, wenn die Fahrzeuggeschwindigkeit v_{ref} gleich Null ist.

6. Manövrierhilfe nach zumindest einem der Ansprüche 1 bis 5, **dadurch gekennzeichnet, daß** sich die Charakteristik der Fahrzeugreaktion ausgehend von der Manövriercharakteristik bei steigenden Fahrzeuggeschwindigkeiten, bei größeren Gaspedalstellungen und/oder bei schnelleren Gaspedalbetätigungen an eine normale Charakteristik annähert.

7. Manövrierhilfe nach zumindest einem der Ansprüche 1 bis 6, **dadurch gekennzeichnet, daß** eine Wähleinrichtung zum Auswählen eines Manövrierfahrzustands vorgesehen ist.

8. Manövrierhilfe nach Anspruch 7, **dadurch gekennzeichnet, daß** die Steuereinheit (4) bei ausgewähltem Manövrierzustand die Manövriergeschwindigkeit einstellt, wenn das Gaspedal betätigt wird und das Fahrzeug (1) abbremst, wenn das Gaspedal losgelassen wird, mit einer damit verbundenen Betätigung einer Feststellbremse, wenn die Fahrzeuggeschwindigkeit v_{ref} gleich Null ist.

9. Manövrierhilfe nach zumindest einem der Ansprüche 1 bis 8, **dadurch gekennzeichnet, daß** im Manövrierzustand die Manövriergeschwindigkeit konstant gehalten wird.

10. Manövrierhilfe nach zumindest einem der Ansprüche 1 bis 8, **dadurch gekennzeichnet, daß** im Manövrierzustand die Manövriergeschwindigkeit mit größer werdender Gaspedalstellung ansteigt.

11. Manövrierhilfe nach zumindest einem der Ansprüche 1 bis 10, **dadurch gekennzeichnet, daß** ein Abstandssensor vorgesehen ist, der an die Steuereinheit (4) bei Erreichen eines vorbestimmten Minimalabstands zu einem Hindernis ein Warnsignal ausgibt, woraufhin die Steuereinheit (4) das Fahrzeug (1) anhält.

12. Verfahren zum Manövrieren von Kraftfahrzeugen, mit den Schritten:
- Erfassen einer Gaspedalstellung α,
- Erfassen einer Fahrzeuggeschwindigkeit v_{ref},
- Aufnehmen der Gaspedalstellung α und der Fahrzeuggeschwindigkeit v_{ref} durch eine Steuereinheit (4), wobei die Steuereinheit (4) ermittelt, ob sich das Fahrzeug (1) in einem Manövrierzustand befindet und bei Vorliegen eines solchen Zustands ein Antriebsaggregat (6) und/oder ein Bremssteuersystem (3) des Fahrzeugs (1) derart angesteuert werden, daß das Fahrzeug (1) mit einer Manövriergeschwindigkeit bewegt wird,
bei welchem Verfahren die Steuereinheit (4) dann auf das Vorliegen eines Manövrierzustands schließt, wenn die Gaspedalstellung α kleiner oder gleich als ein Grenzwert α_{grenz} ist, wenn eine erste Ableitung α̇ der Gaspedalstellung α kleiner oder gleich als ein Grenzwert α̇_{grenz} ist und/oder wenn die Fahrzeuggeschwindigkeit v_{ref} kleiner oder gleich als ein Grenzwert v_{grenz} sind.

## Claims

1. Manoeuvring assistance system for automotive vehicles, which includes
- an accelerator pedal sensor (5) for detecting an accelerator pedal position α,
- a device for determining a vehicle speed v_{ref} and
- a control unit (4) for gathering the accelerator pedal position α and the vehicle speed v_{ref} and for detecting whether the vehicle (1) is in a manoeuvring condition, wherein upon the existence of such a condition, a drive assembly (6) and/or a brake control system (3) of the vehicle (1) will be actuated so that the vehicle (1) is moved at a manoeuvring speed,
in which manoeuvring assistance system the control unit (4) concludes that a manoeuvring condition prevails when the accelerator pedal position α is inferior, or equal to, a limit value αₗᵢₘᵢₜ, when a first derivative α̇ of the accelerator pedal position α is inferior, or equal to, a limit value α̇ₗᵢₘᵢₜ, and/or when the vehicle speed v_{ref} is lower than, or equal to, a limit value vₗᵢₘᵢₜ.

2. Manoeuvring assistance system as claimed in claim 1,
**characterized in that** the control unit (4) concludes that a manoeuvring condition prevails when the accelerator pedal position α is inferior, or equal to, a limit value αₗᵢₘᵢₜ, when a first derivative α̇ of the accelerator pedal position α is inferior, or equal to, a limit value α̇ₗᵢₘᵢₜ, and/or when the vehicle speed v_{ref} is lower than, or equal to, a limit value vₗᵢₘᵢₜ.

3. Manoeuvring assistance system as claimed in claim 1 or claim 2,
**characterized in that** the control unit (4) further takes into account as a condition for the existence of a manoeuvring condition that a second derivative α of the accelerator pedal position α is inferior, or equal to, a limit value αₗᵢₘᵢₜ.

4. Manoeuvring assistance system as claimed in at least one of claims 1 to 3,
**characterized in that** the manoeuvring condition is controlled by way of a single-pedal operation, wherein a detected application of the accelerator pedal corresponds to an adjustment of the manoeuvring speed, and release of the accelerator pedal corresponds to a deceleration, along with a related actuation of a parking brake, when the vehicle speed v_{ref} equals 0.

5. Manoeuvring assistance system as claimed in at least one of claims 1 to 3,
**characterized in that** the manoeuvring condition is controlled by way of a two-pedal operation, wherein a detected application of the accelerator pedal means the adjustment of an acceleration, a non-application of the accelerator pedal and a brake pedal means maintaining the manoeuvring speed constant, and an application of the brake pedal means a reduction of the manoeuvring speed along with a related actuation of a parking brake, when the vehicle speed v_{ref} equals 0.

6. Manoeuvring assistance system as claimed in at least one of claims 1 to 5,
**characterized in that** the characteristics of the vehicle reaction, starting from the manoeuvring characteristics, approaches a normal characteristics with rising vehicle speeds, with more depressed accelerator pedal positions and/or at quicker accelerator pedal applications.

7. Manoeuvring assistance system as claimed in at least one of claims 1 to 6,
**characterized in that** there is provision of a selection device for selecting a manoeuvring condition.

8. Manoeuvring assistance system as claimed in claim 7,
**characterized in that** with the manoeuvring condition selected, the control unit (4) adjusts the manoeuvring speed when the accelerator pedal is applied and the vehicle (1) slows down when the accelerator pedal is released, along with a related actuation of a parking brake when the vehicle speed v_{ref} equals 0.

9. Manoeuvring assistance system as claimed in at least one of claims 1 to 8,
**characterized in that** the manoeuvring speed is maintained constant in the manoeuvring condition.

10. Manoeuvring assistance system as claimed in at least one of claims 1 to 8,
**characterized in that** the manoeuvring speed rises with an increasingly depressed accelerator pedal in the manoeuvring condition.

11. Manoeuvring assistance system as claimed in at least one of claims 1 to 10,
**characterized in that** there is provision of a ranging sensor which will issue an alarm signal to the control unit (4) when a predetermined minimum distance from an obstacle is reached, whereupon the control unit (4) stops the vehicle (1).

12. Method of manoeuvring automotive vehicles, comprising the steps of:
- detecting an accelerator pedal position α,
- detecting a vehicle speed v_{ref},
- gathering the accelerator pedal position α and Lhe vehicle speed v_{ref} in a control unit (4), with the control unit (4) determining whether the vehicle (1) is in a manoeuvring condition and, when such a condition prevails, a drive assembly (6) and/or a brake control system (3) of the vehicle (1) are actuated in such a fashion that the vehicle (1) is moved at a manoeuvring speed,
in which method the control unit (4) concludes that a manoeuvring condition prevails when the accelerator pedal position α is inferior, or equal to, a limit value αₗᵢₘᵢₜ, when a first derivative α̇ of the accelerator pedal position α is inferior, or equal to, a limit value α̇ₗᵢₘᵢₜ, and/or when the vehicle speed v_{ref} is lower than, or equal to, a limit value vₗᵢₘᵢₜ.

## Revendications

1. Auxiliaire de manoeuvre pour véhicule automobile comportant
- un capteur de pédale d'accélérateur (5) pour détecter une position α de la pédale d'accélérateur,
- un dispositif pour déterminer une vitesse v_{ref} du véhicule et
- une unité de commande (4) pour recevoir la position α de la pédale d'accélérateur et la vitesse v_{ref} du véhicule et pour détecter si le véhicule (1) se trouve dans un état de manoeuvre, en présence de cet état un groupe motopropulseur (6) et/ou un système de commande de frein (3) du véhicule (1) étant commandé de manière que le véhicule (1) soit déplacé à une vitesse de manoeuvre,
dans lequel auxiliaire de manoeuvre de l'unité de commande (4) conclut à la présence d'un état de manoeuvre lorsque la position α de la pédale d'accélérateur est inférieure ou égale à une valeur limite αₗᵢₘᵢₜₑ, lorsqu'une première dérivée α̇ de la position α de la pédale d'accélérateur est inférieure ou égale à une valeur limite α̇ₗᵢₘᵢₜₑ et/ou lorsque la vitesse v_{ref} du véhicule est inférieure ou égale à une valeur limite vₗᵢₘᵢₜₑ.

2. Auxiliaire de manoeuvre selon la revendication 1, **caractérisé en ce que** l'unité de commande (1) conclut à la présence d'un état de manoeuvre lorsque la position α de la pédale d'accélérateur est inférieure ou égale à une valeur limite αₗᵢₘᵢₜₑ, lorsqu'une première dérivée α de la position α de la pédale d'accélérateur est inférieure ou égale à une valeur limite α̇ₗᵢₘᵢₜₑ et/ou lorsque la vitesse v_{ref} du véhicule est intérieure ou égale à une valeur limite vₗᵢₘᵢₜₑ.

3. Auxiliaire de manoeuvre selon la revendication 1 ou 2, **caractérisé en ce que** l'unité de commande (4) accepte comme condition supplémentaire pour la présence de l'état de manoeuvre qu'une deuxième dérivée α de la position α de la pédale d'accélérateur soit inférieure ou égale à une valeur limite α̇ₗᵢₘᵢₜₑ

4. Auxiliaire de manoeuvre selon l'une au moins des revendications 1 à 3, **caractérisé en ce que** l'état de manoeuvre est commandé par un dispositif de commande à une pédale, un actionnement détecté de la pédale d'accélérateur correspondant à un réglage de la vitesse de manoeuvre et un relâchement de la pédale d'accélérateur correspondant à un freinage avec un actionnement lié à celui-ci d'un frein de stationnement, lorsque la vitesse v_{ref} du véhicule est égale à zéro.

5. Auxiliaire de manoeuvre selon l'une au moins des revendications 1 à 3, **caractérisé en ce que** l'état de manoeuvre est commandé par un dispositif de commande à deux pédales un actionnement détecté de la pédale d'accélérateur signifiant la mise en place d'une accélération, un non-actionnement de la pédale d'accélérateur et d'une pédale de frein signifiant un maintien constante de la vitesse de manoeuvre, et un actionnement de la pédale de frein signifiant une réduction de la vitesse de manoeuvre avec un actionnement lié à celle-ci d'un frein de stationnement, lorsque la vitesse v_{ref} du véhicule est égale à zéro.

6. Auxiliaire de manoeuvre selon l'une au moins des revendications 1 à 5, **caractérisé en ce que** la caractéristique de la réaction du véhicule, partant de la caractéristique de manoeuvre s'approche d'une caractéristique normale lorsque les vitesses du véhicule augmentent, lorsque les positions de la pédale d'accélérateur sont plus grandes et/ou lorsque les actionnements de la pédale d'accélérateur sont plus rapides.

7. Auxiliaire de manoeuvre selon l'une au moins des revendications 1 à 6, **caractérisé en ce qu'**il est prévu un dispositif de sélection pour sélectionner un état de manoeuvre.

8. Auxiliaire de manoeuvre selon la revendication 7, **caractérisé en ce que** l'unité de commande (4) met en place la vitesse de manoeuvre, dans l'état de manoeuvre sélectionné, si la pédale d'accélérateur est actionnée et le véhicule (1) freine si la pédale d'accélérateur est relâchée avec un actionnement lié d'un frein de stationnement, si la vitesse v_{ref} du véhicule est égale à zéro.

9. Auxiliaire de manoeuvre selon l'une au moins des revendications 1 à 8, **caractérisé en ce qu'**à l'état de manoeuvre la vitesse de manoeuvre est maintenue constante.

10. Auxiliaire de manoeuvre selon l'une au moins des revendications 1 à 8, **caractérisé en ce qu'**à l'état de manoeuvre la vitesse de manoeuvre croît lorsque la position de la pédale d'accélérateur devient plus grande.

11. Auxiliaire de manoeuvre selon l'une au moins des revendications 1 à 10, **caractérisé en ce qu'**il est prévu un capteur de distance qui délivre à l'unité de commande (4) un signal d'avertissement, lorsqu'une distance minimale prédéterminée par rapport à un obstacle est atteinte, après quoi l'unité de commande (4) stoppe le véhicule (1).

12. Procédé pour manoeuvrer des véhicules automobiles, comportant les étapes suivantes :
- détection d'une position α de la pédale d'accélérateur,
- détection d'une vitesse v_{ref} du véhicule,
- réception de la position α de la pédale d'accélérateur et de la vitesse v_{ref} du véhicule par une unité de commande (4), l'unité de commande (4) déterminant si le véhicule (1) se trouve dans un état de manoeuvre et, en présence de cet état, un groupe motopropulseur (6) et/ou un système de commande de frein (3) du véhicule (1) étant commandé de manière que le véhicule (1) soit déplacé à une vitesse de manoeuvre,
dans lequel le procédé de l'unité de commande (4) conclut à la présence d'un état de manoeuvre si la position α de la pédale d'accélérateur est inférieure ou égale à une valeur limite αₗᵢₘᵢₜₑ, si une première dérivée α̇ de la position α de la pédale d'accélérateur est inférieure ou égale à une valeur limite α̇ₗᵢₘᵢₜₑ et/ou si la vitesse v_{ref} du véhicule est inférieure ou égale à une valeur limite vₗᵢₘᵢₜₑ.
